(19) Europäisches Patentamt
European Patent Office
Office européen des brevets

(11) **EP 3 593 147 B1**

(12) **FASCICULE DE BREVET EUROPEEN**

(45) Date de publication et mention
de la délivrance du brevet:
**31.03.2021 Bulletin 2021/13**

(21) Numéro de dépôt: **18708370.4**

(22) Date de dépôt: **22.02.2018**

(51) Int Cl.:
*G01P 5/24* (2006.01)      *G01F 1/66* (2006.01)
*G01D 4/00* (2006.01)      *G01D 3/08* (2006.01)

(86) Numéro de dépôt international:
**PCT/EP2018/054451**

(87) Numéro de publication internationale:
**WO 2018/162250 (13.09.2018 Gazette 2018/37)**

(54) **PROCEDE DE MESURE D'UNE VITESSE D'UN FLUIDE**

VERFAHREN ZUR MESSUNG EINER GESCHWINDIGKEIT EINES FLUIDS

METHOD FOR MEASURING A SPEED OF A FLUID

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.03.2017 FR 1751990**

(43) Date de publication de la demande:
**15.01.2020 Bulletin 2020/03**

(73) Titulaire: **Sagemcom Energy & Telecom SAS
92500 Rueil-Malmaison (FR)**

(72) Inventeur: **TEBOULLE, Henri
92500 Rueil Malmaison (FR)**

(74) Mandataire: **Lavaud, Thomas et al
Cabinet Boettcher
16, rue Médéric
75017 Paris (FR)**

(56) Documents cités:
**EP-A1- 0 218 293      EP-A1- 2 605 225
JP-A- 2003 302 416      US-A1- 2014 012 518**

**Description**

L'invention concerne le domaine des procédés de mesure d'une vitesse d'un fluide.

ARRIERE PLAN DE L'INVENTION

Un compteur de fluide à ultrason utilise classiquement, pour mesurer un débit d'un fluide circulant dans un tuyau, un dispositif de mesure de la vitesse du fluide par émission et réception de signaux ultrasonores de mesure.

Un tel dispositif de mesure comporte un conduit, raccordé au tuyau, dans lequel circule le fluide. Pour mesurer la vitesse du fluide, on émet dans le conduit un signal ultrasonore de mesure parcourant un trajet de longueur définie, on mesure les temps de trajet mis par le signal ultrasonore de mesure pour parcourir le trajet de longueur définie d'amont en aval et d'aval en amont, et on estime la vitesse du fluide à partir notamment de la longueur définie et de la différence entre les temps de trajet.

Dans le cas des compteurs d'eau, trois types de dispositif de mesure sont principalement utilisés.

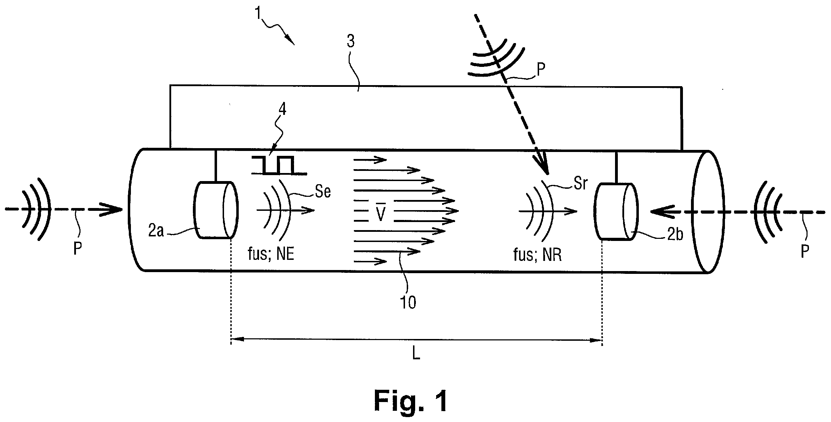

Un premier type de dispositif de mesure 1, parfois désigné par les termes anglais *classical pipe,* est visible sur la figure 1. Le premier type de dispositif de mesure 1 comporte un premier transducteur 2a, un deuxième transducteur 2b, et un module de mesure 3 relié au premier transducteur 2a et au deuxième transducteur 2b.

Le premier transducteur 2a et le deuxième transducteur 2b sont appairés. Le premier transducteur 2a et le deuxième transducteur 2b sont par exemple des transducteurs piézoélectriques.

Le trajet de longueur définie est donc un trajet rectiligne de longueur L entre le premier transducteur 2a et le deuxième transducteur 2b.

Le premier transducteur 2a émet un signal ultrasonore de mesure Se. Le signal ultrasonore de mesure Se est par exemple généré à partir d'un signal rectangulaire 4. Le deuxième transducteur 2b reçoit un signal ultrasonore Sr résultant de la propagation dans le fluide du signal ultrasonore de mesure Se.

Le module de mesure 3 estime ainsi un temps de trajet Tab mis par le signal ultrasonore de mesure Se pour parcourir le trajet de longueur définie d'amont en aval.

De même, le deuxième transducteur 2b émet un signal ultrasonore de mesure qui est reçu par le premier transducteur 2a. Le module de mesure 3 estime ainsi un temps de trajet Tba mis par le signal ultrasonore de mesure pour parcourir le trajet de longueur définie d'aval en amont.

Le module de mesure 3 calcule alors la vitesse moyenne $\overline{V}$ du fluide en utilisant la formule :
$\Delta T = Tba - Tab = (\overline{V} . 2L)/c^2$, où c est la vitesse d'une onde ultrasonore dans l'eau. La vitesse d'une onde ultrasonore dans l'eau est égale à environ 1500m/s, et dépend de la température.

Un tel dispositif est connu du document JP 2003 302416 A.

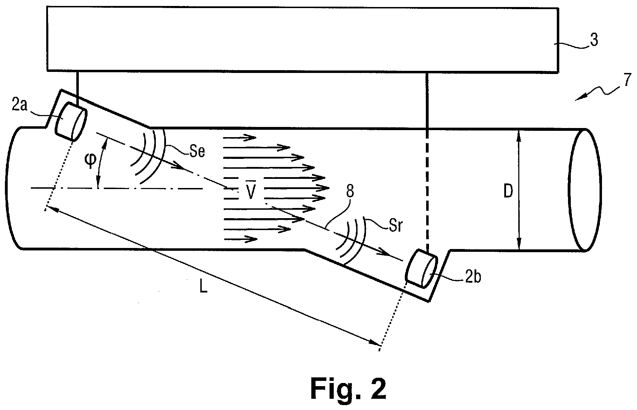

Un deuxième type de dispositif de mesure 7, parfois désigné par les termes anglais *free pipe,* est visible sur la figure 2. Le premier transducteur 2a et le deuxième transducteur 2b sont cette fois situés de part et d'autre du conduit, à l'extérieur du conduit. Le deuxième type de dispositif de mesure 7 présente donc l'avantage de ne pas être intrusif.

Le trajet de longueur définie est à nouveau un trajet rectiligne 8 de longueur L entre le premier transducteur 2a et le deuxième transducteur 2b.

Le module de mesure 3 calcule la vitesse moyenne V du fluide en utilisant la formule :

$$\Delta T = Tba - Tab = (\overline{V} . 2L\cos\varphi)/c^2.$$

Il convient, dans le cas du deuxième type de dispositif de mesure 7, d'avoir un cos$\varphi$ important et donc un angle $\varphi$ très proche de 0. Il faut donc soit réduire le diamètre D du conduit, soit augmenter la longueur L. La réduction du diamètre D présente un risque de baisse de charge de l'eau dans le tuyau, alors que l'augmentation de la longueur L tend à réduire le rapport de signal sur bruit des mesures, du fait de la réduction du niveau du signal ultrasonore reçu Sr.

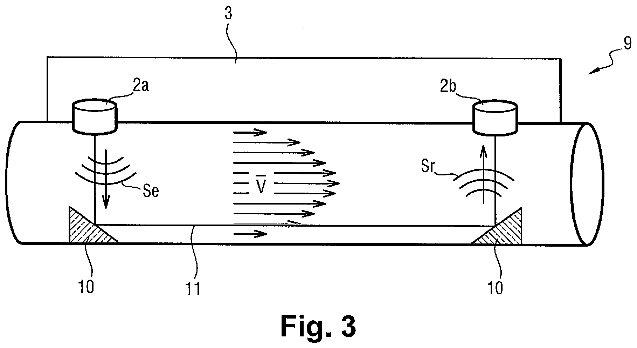

Un troisième type de dispositif de mesure 9, parfois désigné par le terme anglais *U-shape,* est visible sur la figure 3. Le troisième type de dispositif de mesure 9 vise à résoudre les inconvénients précités. Le troisième type de dispositif 9 est une solution peu intrusive qui utilise des réflecteurs 10 (ici, des miroirs orientés à 45°) permettant de résoudre le problème du cos$\varphi$.

Le trajet de longueur définie est un trajet 11 en forme de U entre le premier transducteur 2a et le deuxième transducteur 2b.

Il peut arriver que des perturbations P (visibles sur la figure 1), par exemple des anomalies ou des tentatives de fraude, dégradent le fonctionnement du dispositif de mesure d'un compteur de fluide.

Une anomalie est ici définie comme étant un phénomène involontaire résultant par exemple d'un problème de fonctionnement (par exemple du compteur ou du réseau) ou d'un problème d'écoulement du fluide.

Une tentative de fraude est ici définie comme étant un phénomène volontaire et est réalisée par exemple à l'aide d'un générateur ultrasonore. Une tentative de fraude peut être réalisée depuis l'extérieur du tuyau et du conduit, mais aussi depuis l'intérieur du tuyau, par exemple en positionnant un générateur ultrasonore étanche dans un filtre antiparticules situé en aval du compteur et à proximité de celui-ci.

OBJET DE L'INVENTION

L'invention a pour objet de détecter la présence d'une perturbation susceptible de dégrader les mesures réalisées dans un compteur de fluide à ultrason, et de déterminer si la perturbation résulte d'une anomalie ou d'une fraude.

RESUME DE L'INVENTION

En vue de la réalisation de ce but, on propose un procédé de mesure d'une vitesse d'un fluide, comportant des phases de mesure qui comprennent chacune les étapes d'émettre un signal ultrasonore de mesure, de recevoir le signal ultrasonore de mesure après qu'il ait parcouru un trajet de longueur définie, et d'évaluer la vitesse du fluide en fonction d'un temps de trajet mis par le signal ultrasonore de mesure pour parcourir le trajet de longueur définie, le procédé de mesure comportant en outre des phases de détection réalisées chacune entre deux phases de mesure, chaque phase de détection comportant les étapes :

- de mesurer un niveau de signal ultrasonore parasite présent dans le fluide ;
- de comparer le niveau de signal ultrasonore parasite avec une valeur courante d'un seuil de détection, le seuil de détection étant susceptible de prendre une pluralité de valeurs prédéfinies comprises entre un seuil de détection maximal et un seuil de détection minimal ;
- si le niveau de signal ultrasonore parasite mesuré est inférieur à la valeur courante du seuil de détection, de réduire la valeur courante du seuil de détection, et de réitérer l'étape de mesure et l'étape de comparaison ;
- lorsque le niveau de signal ultrasonore parasite mesuré devient supérieur ou égal à une valeur courante limite du seuil de détection, de détecter une perturbation et, en fonction de la valeur courante limite du seuil de détection, de déterminer si la perturbation provient d'une anomalie ou d'une tentative de fraude.

On détecte ainsi la survenue d'une perturbation, et on détermine si la perturbation provient d'une anomalie ou d'une tentative de fraude.
On propose aussi un compteur de fluide à ultrason comportant un premier transducteur, un deuxième transducteur, et des moyens de traitement agencés pour mettre en œuvre le procédé de mesure qui vient d'être décrit.
On propose aussi un programme d'ordinateur comprenant des instructions pour mettre en œuvre, par un compteur de fluide à ultrason, le procédé de mesure qui vient d'être décrit.
On propose de plus des moyens de stockage qui stockent un programme d'ordinateur comprenant des instructions pour mettre en œuvre, par un compteur de fluide à ultrason, le procédé de mesure qui vient d'être décrit.
D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 représente un dispositif de mesure ultrasonore d'un premier type ;
- la figure 2 représente un dispositif de mesure ultrasonore d'un deuxième type ;
- la figure 3 représente un dispositif de mesure ultrasonore d'un troisième type ;
- la figure 4 représente un signal ultrasonore de mesure reçu après qu'il ait parcouru un trajet de longueur définie ;
- la figure 5 représente des étapes d'une phase de détection du procédé de mesure selon l'invention.

DESCRIPTION DETAILLEE DE L'INVENTION

Le procédé de mesure d'une vitesse d'un fluide selon l'invention est ici mis en œuvre dans un compteur d'eau à ultrason.
Le compteur d'eau à ultrason comporte un conduit dans lequel circule de l'eau fournie par un réseau de distribution à une installation, ainsi qu'un dispositif de mesure de la vitesse de l'eau tel que celui représenté sur la figure 1.
L'eau circule dans le conduit d'amont en aval, comme cela est indiqué par le sens des flèches 10 visibles sur la figure 1.

Le dispositif de mesure comporte le module de mesure 3, le premier transducteur 2a et le deuxième transducteur 2b.

Le module de mesure 3 comprend des moyens de traitement comportant un composant de traitement intelligent adapté à exécuter des instructions d'un programme pour mettre en œuvre les différentes étapes du procédé de mesure selon l'invention. Le composant intelligent est ici un microcontrôleur, mais pourrait être un composant différent, par exemple un processeur ou un FPGA.

Les moyens de traitement pilotent le premier transducteur 2a et le deuxième transducteur 2b.

Le premier transducteur 2a et le deuxième transducteur 2b sont appairés. Le premier transducteur 2a et le deuxième transducteur 2b sont ici des transducteurs piézoélectriques.

Le premier transducteur 2a et le deuxième transducteur 2b remplissent chacun successivement la fonction d'un émetteur de signaux ultrasonores de mesure, et la fonction d'un récepteur de signaux ultrasonores de mesure.

Les moyens de traitement fournissent ainsi à l'émetteur des signaux électriques que celui-ci transforme en signaux ultrasonores de mesure. Les signaux électriques sont ici des signaux rectangulaires 4. Les moyens de traitement acquièrent les signaux ultrasonores de mesure Sr reçus par le récepteur.

L'émetteur émet les signaux ultrasonores de mesure Se à une fréquence d'émission fus. La fréquence fus est ici comprise entre 900kHz et 4MHz.

Les signaux ultrasonores de mesure Se parcourent ainsi, entre le premier transducteur 2a et le deuxième transducteur 2b, un trajet de longueur définie L d'amont en aval et d'aval en amont. Le trajet de longueur définie est ici un trajet rectiligne entre le premier transducteur 2a et le deuxième transducteur 2b.

Sur la figure 1, on a représenté le premier transducteur 2a remplissant la fonction d'un émetteur et le deuxième transducteur 2b remplissant la fonction d'un récepteur. Le signal ultrasonore de mesure Se parcourt donc le trajet de longueur définie d'amont en aval. Le signal ultrasonore de mesure Se est émis par l'émetteur avec un niveau NE. Le signal ultrasonore de mesure reçu Sr est reçu par le récepteur avec un niveau NR inférieur au niveau NE.

Le procédé de mesure selon l'invention comporte des phases de mesures, répétées à intervalles réguliers.

On décrit maintenant l'une de ces phases de mesure.

Les moyens de traitement produisent une mesure de temps de trajet représentative d'un temps mis par le signal ultrasonore de mesure Se pour parcourir le trajet de longueur prédéfinie d'amont en aval, puis produisent une mesure de temps de trajet représentative d'un temps mis par le signal ultrasonore de mesure Se pour parcourir le trajet de longueur prédéfinie d'aval en amont, puis enfin évaluent la vitesse de l'eau en fonction de ces temps de trajet.

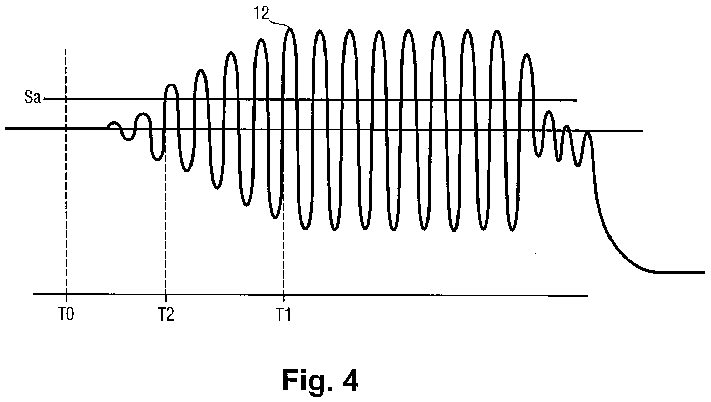

La figure 4 représente un signal ultrasonore de mesure reçu Sr, qui est reçu par le récepteur après avoir parcouru le trajet de longueur définie.

Le récepteur active la réception à un moment T0, synchronisé avec l'émission du signal ultrasonore de mesure Se. L'appairage de l'émetteur et du récepteur rend possible cette synchronisation.

La mesure de temps de trajet est obtenue à partir de la détermination d'un moment de survenue T1 d'un lobe prédéterminé 12 du signal ultrasonore de mesure reçu Sr.

Le moment de survenue T1 est ici l'instant où survient un front montant du lobe prédéterminé 12. Le moment de survenue T1 est mesuré par une méthode du type « Zéro Crossing ».

Le lobe prédéterminé 12 est un $j^{ième}$ lobe du signal ultrasonore de mesure reçu Sr après qu'une amplitude du signal ultrasonore de mesure reçu Sr ait dépassé, au temps T2, un seuil d'amplitude prédéterminé Sa. Le $j^{ième}$ lobe est en l'occurrence ici le quatrième lobe.

La vitesse de l'eau est ensuite évaluée par le module de mesure 3 en fonction d'une mesure de temps de trajet d'amont en aval et d'une mesure de temps de trajet d'aval en amont.

La vitesse de l'eau est proportionnelle à une différence entre la mesure de temps de trajet d'aval en amont et la mesure de temps de trajet d'amont en aval.

On note que la vitesse de l'eau mesurée est ici une vitesse moyenne de l'eau dans le diamètre du conduit, la vitesse des masses d'eau étant en effet différente au centre du conduit et à proximité des parois du conduit.

Outre les phases de mesure, le procédé de mesure selon l'invention comporte des phases de détection qui permettent de délecter la survenue d'une perturbation et de déterminer si la perturbation provient d'une anomalie ou d'une tentative de fraude.

Chaque phase de détection est répétée à intervalles réguliers, périodiques ou non, entre deux phases de mesure. La phase de détection consiste à rendre programmable le seuil d'amplitude prédéterminé Sa évoqué plus tôt, pour détecter la présence d'une perturbation.

Le seuil d'amplitude prédéterminé programmable est ainsi un seuil de détection S_n susceptible de prendre une pluralité de valeurs prédéfinies comprises entre un seuil de détection maximal S0 et un seuil de détection minimal S_N-1. Les valeurs prédéfinies du seuil de détection S_n sont chacune référencées par l'indice n et présentent des valeurs décroissantes relativement aux indices n.

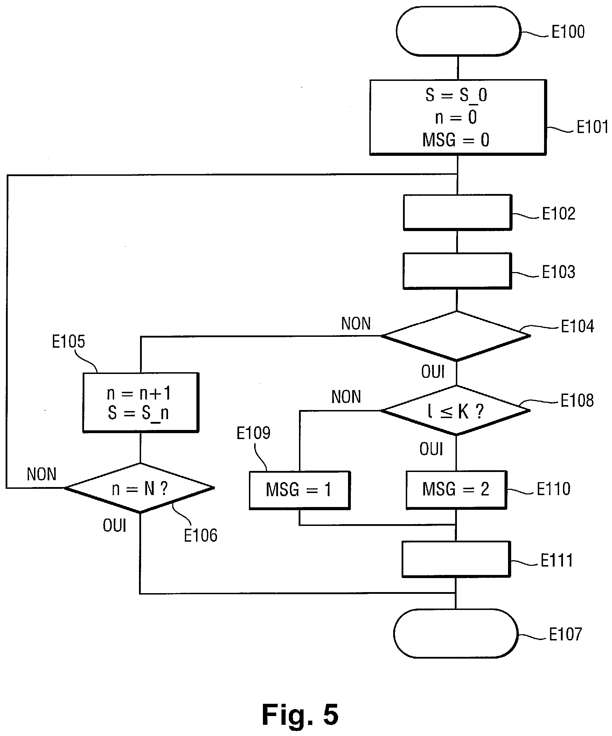

On décrit maintenant plus en détail, en référence à la figure 5, les différentes étapes que comporte une phase de détection.

Suite à une étape de départ (étape E100), la phase de détection comporte une étape d'initialisation (étape E101) consistant à initialiser l'indice n à 0, une valeur courante du seuil de détection $S\_n$ au seuil de détection maximal $S\_0$, et une variable MSG à 0. On comprendra plus bas le rôle de la variable MSG.

La phase de détection comporte ensuite une étape d'attente (étape E102) et une étape de mesure (étape E103).

L'étape d'attente est destinée à retarder d'un temps de retard la mise en œuvre de l'étape de mesure.

Le temps de retard est compté à partir d'un moment où un niveau du signal ultrasonore de mesure généré au cours d'une phase de mesure précédente devient inférieur à un seuil de silence prédéterminé.

Le temps de retard est ici égal à 15ms.

Le niveau du signal ultrasonore de mesure généré au cours de la phase de mesure précédente est mesuré à la fois par le premier transducteur 2a agissant comme récepteur et par le deuxième transducteur 2b agissant comme récepteur.

Ainsi, suite au temps de retard, le niveau de signal ultrasonore mesuré et généré volontairement, au cours de la phase de mesure précédente, est presque nul.

La phase de détection comporte ensuite une étape au cours de laquelle le premier transducteur 2a (ou bien le deuxième transducteur 2b) joue le rôle d'un récepteur (E103).

Le récepteur acquiert le niveau de signal ultrasonore présent dans l'eau alors qu'aucun signal ultrasonore de mesure n'est généré. Les moyens de traitement mesurent alors ce signal sonore « parasite » présent dans l'eau, et comparent le niveau du signal ultrasonore parasite avec la valeur courante du seuil de détection $S\_n$ (étape E104). La valeur courante du seuil de détection est à ce moment égale à $S\_0$.

Si le niveau de signal ultrasonore parasite est inférieur à la valeur courante du seuil de détection $S\_n$, la présence d'une perturbation n'est pas détectée.

L'indice n est alors incrémenté : l'indice n devient égal à 1, et la valeur courante du seuil de détection devient égale à S1 (étape E105).

L'indice n est alors comparé avec la valeur N (étape E106).

Si n atteint la valeur N, la phase de détection s'achève sans qu'une perturbation ne soit détectée (étape E107). Sinon, la phase de détection reprend à l'étape E102.

Par contre, au cours de l'étape E104, lorsque le niveau de signal ultrasonore parasite mesuré devient supérieur ou égal à une valeur courante limite du seuil de détection $S\_1$, une perturbation est détectée.

On compare alors l'indice l de la valeur courante limite du seuil de détection $S\_l$ avec un seuil d'indice prédéfini K (E108).

Si l'indice l de la valeur courante limite du seuil de détection $S\_l$ est supérieur au seuil d'indice prédéfini K, cela signifie que la valeur courante limite du seuil de détection $S\_l$ est relativement faible et donc que le niveau du signal ultrasonore parasite est relativement faible. On en déduit que la perturbation correspond à une anomalie.

La variable MSG prend alors la valeur 1 (étape E109) .

Au contraire, si l'indice l de la valeur courante limite du seuil de détection $S\_l$ est inférieur ou égal au seuil d'indice prédéfini K, cela signifie que la valeur courante limite du seuil de détection $S\_l$ est élevée et donc que le niveau du signal ultrasonore parasite est élevé. On en déduit que la perturbation correspond à une tentative de fraude.

La variable MSG prend alors la valeur 2 (étape E110).

La phase de détection comporte ensuite une étape de transmission d'un message d'alerte qui dépend de la valeur de la variable MSG (étape E111). Si la variable MSG est égale à 1, le message d'alerte est un message d'anomalie et, si la variable MSG est égale à 2, le message est un message de fraude.

Le message d'alerte est transféré à une « entité », qui est par exemple un fournisseur d'eau, un gestionnaire du réseau d'eau, un opérateur quelconque, un client consommateur de l'eau.

Le message d'alerte est transmis par courants porteurs en ligne ou par tout autre type de moyen de communication (filaire ou sans fil). Dans le cas où des courants porteurs en ligne sont choisis, les couches applicatives DLMS et COSEM sont avantageusement utilisées.

Dans ce cas, un exemple de message d'alerte est par exemple :

```
<EventNotificationRequest>
 <AttributeDescriptor>
  <ClassldValue="0001" />
  <InstanceldValue="0000616200FF" />
  <AttributeldValue="02" />
 </AttributeDescriptor>
 <AttributeValue>
  <DoubleLongUnsignedValue="00000001" />
 </AttributeValue>
</EventNotificationRequest>
```

L'encodage associé à l'alarme correspondante est : C20000010000616200FF020600000001.

On peut prévoir, au cours de la phase de détection, d'émettre un signal ultrasonore leurre, et de tenter de détecter un signal ultrasonore frauduleux émis en réponse au signal ultrasonique leurre. En effet, il existe des générateurs ultrasonores très perfectionnés, susceptibles d'être utilisés à des fins frauduleuses, qui tentent de se synchroniser sur des émissions de signaux ultrasonores de mesure pour les perturber.

Pour contrer ce type de fraude, on émet le signal leurre pendant une courte durée, et on « écoute » si, alors que le signal leurre s'est évanoui, un signal ultrasonore est présent. Un tel signal ultrasonore est alors un signal ultrasonore frauduleux. Un message d'alerte (de type MSG=2) est alors émis.

On note qu'il est possible de prévoir que le seuil d'indice prédéfini K, qui permet de distinguer une anomalie d'une tentative de fraude, soit paramétrable. Le paramétrage peut par exemple dépendre de l'heure à laquelle est réalisée la phase de détection. On sait qu'en fin de journée, le réseau de distribution d'eau est beaucoup utilisé, ce qui tend à augmenter la survenue d'anomalies ainsi que le niveau des signaux ultrasonores parasites résultant de ces anomalies. Il peut donc être intéressant de diminuer le seuil d'indice prédéfini K en fin de journée.

Les valeurs prédéfinies $S_0,..., S_{N-1}$ que peut prendre le seuil de détection $S_n$ peuvent aussi être paramétrables.

On note aussi que la totalité de la phase de détection n'est pas nécessairement mise en œuvre dans le compteur d'eau.

Il est par exemple parfaitement possible de prévoir de réaliser les mesures du niveau de signal ultrasonore parasite dans le compteur d'eau, et de transmettre ces mesures vers un équipement externe, par exemple un serveur du *Cloud* géré par une entité. Pour chaque phase de détection, les étapes suivant l'étape de mesure sont alors réalisées dans l'équipement externe. L'entité peut alors utiliser ses propres critères pour détecter et évaluer la perturbation. L'entité peut par exemple définir elle-même le seuil d'indice prédéfini K qui permet de distinguer une anomalie d'une tentative de fraude.

Bien entendu, l'invention n'est pas limitée au mode de réalisation décrit mais englobe toute variante entrant dans le champ de l'invention telle que définie par les revendications.

L'invention n'est bien sûr pas limitée à la mesure de la vitesse de l'eau, mais s'applique à tout type de fluide (par exemple à un gaz ou au pétrole).

On a décrit ici l'invention dans un compteur d'eau à ultrason comprenant un premier type de dispositif de mesure (*classical pipe*), mais l'invention peut être mise en œuvre avec tout autre type de dispositif de mesure ultrasonore, et notamment avec le deuxième type de dispositif de mesure et avec le troisième type de dispositif de mesure présentés plus tôt. Tout type de trajet de longueur définie peut être utilisé, avec tout type de réflecteur, tout type de miroir, etc.

On a indiqué que chaque phase de détection est réalisée entre deux phases de mesure. Ces phases de mesure ne sont pas nécessairement des phases de mesure successives. De manière générale, les phases de mesure et les phases de détection peuvent être répétées régulièrement ou non, périodiquement ou non.

Toutes les valeurs numériques fournies ici sont utilisées pour illustrer l'invention, et peuvent bien sûr être différentes lors de la mise en œuvre de l'invention.

**Revendications**

1. Procédé de mesure d'une vitesse d'un fluide, comportant des phases de mesure qui comprennent chacune les étapes d'émettre un signal ultrasonore de mesure (Se), de recevoir le signal ultrasonore de mesure après qu'il ait parcouru un trajet de longueur définie, et d'évaluer la vitesse du fluide en fonction d'un temps de trajet mis par le signal ultrasonore de mesure pour parcourir le trajet de longueur définie, le procédé de mesure comportant en outre des phases de détection réalisées chacune entre deux phases de mesure, chaque phase de détection comportant les étapes :

   - de mesurer un niveau de signal ultrasonore parasite présent dans le fluide ;
   - de comparer le niveau de signal ultrasonore parasite avec une valeur courante d'un seuil de détection ($S_n$), le seuil de détection étant susceptible de prendre une pluralité de valeurs prédéfinies comprises entre un seuil de détection maximal ($S_0$) et un seuil de détection minimal ($S_{N-1}$);
   - si le niveau de signal ultrasonore parasite mesuré est inférieur à la valeur courante du seuil de détection ($S_n$), de réduire la valeur courante du seuil de détection ($S_n$), et de réitérer l'étape de mesure et l'étape de comparaison ;
   - lorsque le niveau de signal ultrasonore parasite mesuré devient supérieur ou égal à une valeur courante limite du seuil de détection ($S_I$), de détecter une perturbation et, en fonction de la valeur courante limite du seuil de détection ($S_I$), de déterminer si la perturbation provient d'une anomalie ou d'une tentative de fraude.

**2.** Procédé de mesure selon la revendication 1, dans lequel les valeurs prédéfinies du seuil de détection sont chacune référencées par un indice (n) et présentent des valeurs décroissantes relativement aux indices (n), et dans lequel on détermine qu'une perturbation provient d'une anomalie si un indice (1) de la valeur courante limite du seuil de détection (S_l) est supérieur à un seuil d'indice prédéfini (K), et on détermine qu'une perturbation provient d'une tentative de fraude si un indice (l) de la valeur courante limite du seuil de détection (S_l) est inférieur ou égal au seuil d'indice prédéfini (K).

**3.** Procédé de mesure selon la revendication 2, dans lequel le seuil d'indice prédéfini (K) est paramétrable.

**4.** Procédé de mesure selon la revendication 3, dans lequel le seuil d'indice prédéfini (K) est paramétrable en fonction de l'heure à laquelle est réalisée la phase de détection.

**5.** Procédé de mesure selon la revendication 1, dans lequel la phase de détection comporte en outre une étape d'attente destinée à retarder d'un temps de retard prédéfini la mise en œuvre de l'étape de mesure.

**6.** Procédé de mesure selon la revendication 5, dans lequel le temps de retard prédéfini est compté à partir d'un moment où un niveau du signal ultrasonore de mesure (Se) généré au cours d'une phase de mesure précédente devient inférieur à un seuil de silence prédéterminé.

**7.** Procédé de mesure selon la revendication 1, dans lequel la phase de détection comporte en outre les étapes d'émettre un signal ultrasonore leurre, et de tenter de détecter un signal ultrasonore frauduleux émis en réponse au signal ultrasonore leurre.

**8.** Procédé de mesure selon la revendication 1, dans lequel la phase de détection comporte en outre l'étape de transmettre à un équipement externe le niveau de signal ultrasonore de perturbation mesuré.

**9.** Procédé de mesure selon la revendication 8, dans lequel les phases de mesure et l'étape de mesure de chaque phase de détection sont mises en œuvre dans un compteur de fluide à ultrason, et dans lequel les étapes suivant l'étape de mesure de chaque phase de détection sont mises en œuvre dans l'équipement externe.

**10.** Procédé de mesure selon la revendication 8, dans lequel l'équipement externe est un serveur du *Cloud.*

**11.** Procédé de mesure selon la revendication 1, dans lequel la phase de détection comporte en outre l'étape de transmettre un message d'alerte lorsqu'une perturbation est détectée.

**12.** Procédé de mesure selon la revendication 11, dans lequel le message d'alerte est transmis par courants porteurs en ligne.

**13.** Compteur de fluide à ultrason comportant un premier transducteur (2a), un deuxième transducteur (2b), et des moyens de traitement agencés pour mettre en œuvre le procédé de mesure selon l'une des revendications précédentes.

**14.** Programme d'ordinateur comprenant des instructions pour mettre en œuvre, par un compteur de fluide à ultrason, le procédé de mesure selon l'une des revendications 1 à 12.

**15.** Moyens de stockage, **caractérisés en ce qu'**ils stockent un programme d'ordinateur comprenant des instructions pour mettre en œuvre, par un compteur de fluide à ultrason, le procédé de mesure selon l'une des revendications 1 à 12.

**Patentansprüche**

**1.** Verfahren zum Messen einer Geschwindigkeit eines Fluids, umfassend Messphasen, die jeweils die Schritte des Sendens eines Ultraschallmesssignals (Se), des Empfangens des Ultraschallmesssignals, nachdem es eine Strecke mit definierter Länge zurückgelegt hat, und des Evaluierens der Geschwindigkeit des Fluids in Abhängigkeit von einer Laufzeit, die von dem Ultraschallmesssignal benötigt wird, um die Strecke mit definierter Länge zurückzulegen, umfassen, wobei das Messverfahren ferner Detektionsphasen umfasst, die jeweils zwischen zwei Messphasen durchgeführt werden, wobei jede Detektionsphase die Schritte umfasst:

- Messen eines Pegels eines Ultraschall-Störsignals, das in dem Fluid vorhanden ist;
- Vergleichen des Pegels des Ultraschall-Störsignals mit einem aktuellen Wert eines Detektionsschwellenwerts ($S\_n$), wobei der Detektionsschwellenwert eine Vielzahl von vordefinierten Werten annehmen kann, die zwischen einem maximalen Detektionsschwellenwert ($S\_0$) und einem minimalen Detektionsschwellenwert ($S\_N-1$) liegen;
- wenn der gemessene Pegel des Ultraschall-Störsignals niedriger als der aktuelle Wert des Detektionsschwellenwerts ($S\_n$) ist, Abziehen des aktuellen Werts vom dem Detektionsschwellenwert ($S\_n$) und Wiederholen des Messschritts und des Vergleichsschritts;
- wenn der gemessene Pegel des Ultraschall-Störsignals größer oder gleich einem aktuellen Grenzwert ($S\_I$) des Detektionsschwellenwerts wird, Erfassen einer Störung und, in Abhängigkeit von dem aktuellen Grenzwert ($S\_I$) des Detektionsschwellenwerts, Bestimmen, ob die Störung von einer Anomalie oder einem Betrugsversuch stammt.

2. Messverfahren nach Anspruch 1, bei dem die vordefinierten Werte des Detektionsschwellenwerts jeweils durch einen Index (n) referenziert sind und Werte aufweisen, die relativ zu den Indizes (n) abnehmen, und bei dem man bestimmt, dass eine Störung von einer Anomalie stammt, wenn ein Index (I) des aktuellen Grenzwerts ($S\_I$) des Detektionsschwellenwerts größer als ein vordefinierter Indexschwellenwert (K) ist, und man bestimmt, dass eine Störung von einem Betrugsversuch stammt, wenn ein Index (I) des aktuellen Grenzwerts ($S\_I$) des Detektionsschwellenwerts kleiner oder gleich einem vordefinierten Indexschwellenwert (K) ist.

3. Messverfahren nach Anspruch 2, bei dem der vordefinierte Indexschwellenwert (K) parametrierbar ist.

4. Messverfahren nach Anspruch 3, bei dem der vordefinierte Indexschwellenwert (K) in Abhängigkeit von der Zeit, zu der die Detektionsphase durchgeführt wird, parametrierbar ist.

5. Messverfahren nach Anspruch 1, bei dem die Detektionsphase ferner einen Warteschritt umfasst, der dazu bestimmt ist, das Durchführen des Messschritts um eine vordefinierte Verzögerungszeit zu verzögern.

6. Messverfahren nach Anspruch 5, bei dem die vordefinierte Verzögerungszeit ab einem Zeitpunkt gezählt wird, ab dem ein Pegel des Ultraschallmesssignals (Se), das während einer vorherigen Messphase erzeugt wird, kleiner als ein vorbestimmter Schweige-Schwellenwert wird.

7. Messverfahren nach Anspruch 1, bei dem die Detektionsphase ferner die Schritte des Sendens eines Köder-Ultraschallsignals und des Versuchens des Erfassens eines Betrugs-Ultraschallsignals umfasst, das in Antwort auf das Köder-Ultraschallsignal gesendet wird.

8. Messverfahren nach Anspruch 1, bei dem die Detektionsphase ferner den Schritt des Übertragens des gemessenen Pegels des Ultraschall-Störsignals an eine externe Ausrüstung umfasst.

9. Messverfahren nach Anspruch 8, bei dem die Messphasen und der Messschritt jeder Detektionsphase in einem Ultraschall-Fluidzähler durchgeführt werden, und bei dem die Schritte, die auf den Messschritt jeder Detektionsphase folgen, in der externen Ausrüstung durchgeführt werden.

10. Messverfahren nach Anspruch 8, bei dem die externe Ausrüstung ein Server der *Cloud* ist.

11. Messverfahren nach Anspruch 1, bei dem die Detektionsphase ferner den Schritt des Übertragens einer Warnmeldung umfasst, wenn eine Störung detektiert wird.

12. Messverfahren nach Anspruch 11, bei dem die Warnmeldung mittels Powerline-Kommunikation übertragen wird.

13. Ultraschall-Fluidzähler, umfassend einen ersten Wandler (2a), einen zweiten Wandler (2b) und Verarbeitungsmittel, die ausgebildet sind, um das Messverfahren nach einem der vorhergehenden Ansprüche durchzuführen.

14. Computerprogramm, umfassend Anweisungen zum Durchführen des Messverfahrens nach einem der Ansprüche 1 bis 12 mittels eines Ultraschall-Fluidzählers.

15. Speichermittel, die **dadurch gekennzeichnet sind, dass** sie ein Computerprogramm speichern, das Anweisungen zum Durchführen des Messverfahrens nach einem der Ansprüche 1 bis 12 mittels eines Ultraschall-Fluidzählers umfasst.

**Claims**

1. A method of measuring the speed of a fluid, the method comprising measurement stages, each comprising the steps of emitting an ultrasound measurement signal (Se), of receiving the ultrasound measurement signal after it has travelled along a path of defined length, and of evaluating the speed of the fluid as a function of the travel time taken by the ultrasound measurement signal to travel along the path of defined length, the measurement method further comprising detection stages that are each performed between two measurement stages, each detection stage comprising the following steps:

   - measuring an interfering ultrasound signal level present in the fluid;
   - ·comparing the interfering ultrasound signal level with a current value of a detection threshold ($S\_n$), the detection threshold being capable of taking a plurality of predefined values lying between a maximum detection threshold ($S\_0$) and a minimum detection threshold ($S\_N-1$);
   - if the measured interfering ultrasound signal level is less than the current value of the detection threshold ($S\_n$), reducing the current value of the detection threshold ($S\_n$), and reiterating the measurement step and the comparison step;
   - when the measured interfering ultrasound signal level becomes greater than or equal to a limit current value of the detection threshold ($S\_l$), detecting a disturbance and, as a function of the limit current value of the detection threshold ($S\_l$), determining whether the disturbance comes from an anomaly or from an attempted fraud.

2. The measurement method according to claim 1, wherein each of the predefined values of the detection threshold is referenced by an index presenting values that decrease with increasing index (n), and wherein a disturbance is determined as coming from an anomaly if the index (l) of the limit current value of the detection threshold ($S\_l$) is greater than a predefined index threshold (K), and a disturbance is determined as coming from an attempted fraud if the index (l) of the limit current value of the detection threshold ($S\_l$) is less than or equal to the predefined index threshold (K).

3. The measurement method according to claim 2, wherein the predefined index threshold is adjustable.

4. The measurement method according to claim 3, wherein the predefined index threshold (K) is adjustable as a function of the time of day at which the detection stage is performed.

5. The measurement method according to claim 1, wherein the detection stage also includes a waiting step for delaying performance of the measurement step by a predefined delay time.

6. The measurement method according to claim 5, wherein the predefined delay time is measured on the basis of a moment when a level of the ultrasound measurement signal (Se) generated during a preceding measurement stage has become lower than a predetermined silence threshold.

7. The measurement method according to claim 1, wherein the detection stage also includes steps of emitting a decoy ultrasound signal, and of attempting to detect a fraudulent ultrasound signal emitted in response to the decoy ultrasound signal.

8. The measurement method according to claim 1, wherein the detection stage also includes the step of transmitting the measured interfering ultrasound signal level to external equipment.

9. The measurement method according to claim 8, wherein the measurement stages and the measurement step in each detection stage are performed in an ultrasound fluid meter, and wherein the steps following the measurement step of each detection stage are performed in the external equipment.

10. The measurement method according to claim 8, wherein the external equipment is a server in the "cloud".

11. The measurement method according to claim 1, wherein the detection stage also includes the step of transmitting a warning message when a disturbance is detected.

12. The measurement method according to claim 11, wherein the warning message is transmitted by powerline carrier.

13. An ultrasound fluid meter comprising a first transducer (2a), a second transducer (2b), and processor means arranged to perform the measurement method according to anyone of preceding claims.

14. A computer program including instructions for enabling an ultrasound fluid meter to perform the measurement method according to anyone of claims 1 to 12.

15. Storage means wherein they store a computer program including instructions for enabling an ultrasound fluid meter to perform the measurement method according to anyone of claims 1 to 12.

**Fig. 1**

EP 3 593 147 B1

Fig. 2

Fig. 3

**Fig. 4**

E100

S = S_0
n = 0
MSG = 0
E101

E102

E103

NON ——— E104

E105

n = n+1
S = S_n

NON — E108
$l \leq K$ ? — E108

E109

OUI

NON
n = N ?

MSG = 1

MSG = 2 — E110

OUI
E106

E111

E107

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2003302416 A